# EUROPÄISCHE PATENTANMELDUNG

(11) **EP 4 215 982 A1**
(43) Veröffentlichungstag der Anmeldung: **26.07.2023**
(21) Anmeldenummer: 23150932.4
(22) Anmeldetag: 10.01.2023
(51) Int. Cl.: G02F 1/035, G02F 1/225

(54) **VERFAHREN ZUM HERSTELLEN EINES ELEKTROOPTISCHEN BAUELEMENTS SOWIE ELEKTROOPTISCHES BAUELEMENT**

(30) Priorität: 21.01.2022 DE 102022101386
(71) Anmelder: Fraunhofer-Gesellschaft zur Förderung der angewandten Forschung e.V., 80686 München (DE)
(72) Erfinder: JANIAK, Klemens, 12163 Berlin (DE); KEIL, Norbert, 14089 Berlin (DE); FIOL, Gerrit, 12487 Berlin (DE); KLEINERT, Moritz, 13187 Berlin (DE)
(74) Vertreter: Maikowski & Ninnemann Patentanwälte Partnerschaft mbB

(57) **Zusammenfassung**

Die Erfindung betrifft ein Verfahren zum Herstellen eines optischen Bauelements, mit den Schritten: Erzeugen mindestens eines optischen Wellenleiters (10) oder eines Teils eines optischen Wellenleiters (10) auf einem Substrat (20), wobei das Erzeugen des optischen Wellenleiters (10) oder des Teils des optischen Wellenleiters (10) ein Erzeugen eines Wellenleiterkerns (102) oder eines Abschnitts (1021) eines Wellenleiterkerns (102) umfasst, wobei der Wellenleiterkern (102) oder der Abschnitt (1021) des Wellenleiterkerns (102) Siliziumnitrid, ein Polymer oder ein III-V-Halbleitermaterial aufweist; Anordnen mindestens einer Schicht (30) aus Lithiumniobat auf einer dem Substrat (20) abgewandten Seite des Wellenleiterkerns (102) oder des Abschnitts (1021) des Wellenleiterkerns (102), wobei nach dem Anordnen der mindestens einen Schicht (30) aus Lithiumniobat zumindest einer der folgenden Schritte durchgeführt wird: Strukturieren der mindestens einen Schicht (30) aus Lithiumniobat, Erzeugen eines weiteren Abschnitts (1022) des Wellenleiterkerns (102) und/oder Anordnen mindestens einer Kontaktstruktur (41, 42) zur elektrischen Kontaktierung der mindestens einen Schicht (30) aus Lithiumniobat.

Die Erfindung betrifft auch ein optisches Bauelement.

## Beschreibung

Die Erfindung betrifft ein Verfahren zum Herstellen eines elektrooptischen Bauelements gemäß Anspruch 1 sowie ein elektrooptisches Bauelement gemäß Anspruch 13.

Aus dem Stand der Technik sind passive optische Wellenleiter bekannt, die einen aus Silizium bestehenden Wellenleiterkern aufweisen, der mit einer Schicht aus Lithiumniobat überdeckt ist. Derartige optische Wellenleiter sind beispielsweise in dem Artikel "Lightwave Circuits in Lithium Niobate through Hybrid Waveguides with Silicon Photonics", P. Weigel et. al, Sci. Rep. 6, 22301; doi: 10.1038/srep22301 (2016) beschrieben.

Das der Erfindung zugrunde liegende Problem besteht darin, möglichst effiziente optische Bauelemente zur Verfügung zu stellen.

Dieses Problem wird durch die Bereitstellung des Verfahrens mit den Merkmalen des Anspruchs 1 sowie des elektrooptischen Bauelements mit den Merkmalen des Anspruchs 13 gelöst. Weiterbildungen der Erfindung sind in den abhängigen Ansprüchen angegeben.

Danach wird ein Verfahren zum Herstellen eines optischen Bauelements, insbesondere eines elektrooptischen Bauelements, bereitgestellt, wobei das Verfahren die folgenden Schritte aufweist:
- Erzeugen mindestens eines optischen Wellenleiters oder eines Teils eines optischen Wellenleiters auf einem Substrat, wobei
- das Erzeugen des optischen Wellenleiters oder des Teils des optischen Wellenleiters ein Erzeugen eines Wellenleiterkerns oder eines Abschnitts eines Wellenleiterkerns umfasst, wobei der Wellenleiterkern oder der Abschnitt des Wellenleiterkerns Siliziumnitrid, ein Polymer oder ein III-V-Halbleitermaterial aufweist;
- Anordnen mindestens einer Schicht aus Lithiumniobat auf einer dem Substrat abgewandten Seite des Wellenleiterkerns oder des Abschnitts des Wellenleiterkerns, wobei
- nach dem Anordnen der mindestens einen Schicht aus Lithiumniobat zumindest einer der folgenden Schritte durchgeführt wird:
   Strukturieren der mindestens einen Schicht aus Lithiumniobat, Erzeugen eines weiteren Abschnitts des Wellenleiterkerns und/oder Anordnen mindestens einer Kontaktstruktur zur elektrischen Kontaktierung der mindestens einen Schicht aus Lithiumniobat.

Die Kombination eines optischen Wellenleiters, dessen Kern ein Material mit geringem elektrooptischen Koeffizienten aufweist, mit einer Schicht aus Lithiumniobat ermöglicht insbesondere eine effiziente Herstellung hochintegrierter phasenschiebender Bauelemente. Beispielsweise lassen sich aktive elektrooptische Bauelemente mit möglichst hoher elektrooptischer Effizienz bei möglichst geringen optischen Verlusten realisieren.

Der Wellenleiterkern oder der Teil des Wellenleiterkerns weist z.B. Siliziumnitrid (Si₃N₄) auf. Siliziumnitrid zeigt ein großes Transparenzfenster (insbesondere im Wellenlängenbereich von 0,4 bis 6,7 µm) mit einer sehr geringen Absorption für Licht. Es kann z.B. mittels Gasphasenabscheidung (LPCVD) etwa auf Silizium (Si)-Substrate mit Siliziumdioxid (SiOz)-Schichten aufgebracht und anschließend z.B. über Trockenätzverfahren (beispielsweise RIE - Reactive Ion Etching - reaktives lonenätzen) strukturiert werden. Das Materialsystem Siliziumnitrid auf Siliziumoxid stellt z.B. eine Plattform für optische Wellenleiter und insbesondere integrierte optische Netzwerke dar. Die möglichen Verluste für derartige Wellenleiter liegen bei wenigen dB/m. Siliziumnitrid weist jedoch keinen nennenswerten elektrooptischen Effekt auf, so dass eine phasenverändernde Wirkung nur thermisch oder indirekt mittels piezoelektrischer Effekte erzielt werden könnte. Beides ist aber sehr langsam. Lithiumniobat (LN) hingegen besitzt einen sehr starken elektrooptischen Effekt (r₃₃ > 30 pm/V) und ebenso ein großes Transparenzfenster (0,35 bis 4,5 µm), weshalb durch die Kombination eines optischen Wellenleiters z.B. auf Si₃N₄-SiO₂-Basis mit einer Schicht aus Lithiumniobat die Herstellung elektrooptisch aktiver Wellenleiter möglich ist. Die Erfindung ist jedoch nicht auf Si₃N₄-SiO₂-Wellenleiter beschränkt. Vielmehr könnte der optische Wellenleiter auch auf Polymerbasis oder auf Basis eines III-V-Halbleitermaterials hergestellt werden. In diesem Fall weist der Wellenleiterkern ein Polymer oder ein III-V-Halbleitermaterial (z.B. ein quaternäres Material wie z.B. InGaAsP) auf.

Die Schicht aus Lithiumniobat liegt z.B. als Kristallschicht (beispielsweise mit einer Dicke von weniger als 500 µm oder weniger als 300 µm) vor oder ist als "LN-on-lnsulator" (LNOI) ausgebildet, wobei sich die Lithiumniobatschicht insbesondere auf einer auf einem Wafer aus Silizium angeordneten Siliziumdioxidschicht befindet.

Gemäß einer Ausgestaltung der Erfindung wird die Schicht aus Lithiumniobat mittels eines Bondverfahrens mit dem optischen Wellenleiter oder dem Teil des optischen Wellenleiters (insbesondere mit dem Wellenleiterkern bzw. mit dem Teil des Wellenleiterkerns) verbunden. Die Schicht aus Lithiumniobat liegt hierbei insbesondere als Schicht auf einem separaten Substrat, z.B. in Form der erwähnten LNOI-Schicht vor. Denkbar ist, dass das Bondverfahren ein Verbinden der Schicht aus Lithiumniobat mit dem optischen Wellenleiter oder dem Teil des optischen Wellenleiters mit Hilfe mindestens einer Zwischenschicht umfasst. Die Zwischenschicht weist beispielsweise ein Polymer, etwa BCB - Benzocyclobuten, auf. Möglich ist jedoch auch, dass das die Schicht aus Lithiumniobat ohne Zwischenschicht unmittelbar mit dem optischen Wellenleiter bzw. dem Teil des optischen Wellenleiters verbunden ("gebondet") wird.

Bei dem Substrat, auf dem der optische Wellenleiter oder der Teil des optischen Wellenleiters angeordnet ist, handelt es sich beispielsweise um einen ersten Wafer, auf dem zur Herstellung einer Mehrzahl optischer Bauelemente gleichzeitig mehrere optische Wellenleiter oder mehrere Teile optischer Wellenleiter erzeugt werden, wobei jedem Bauelement mindestens ein optischer Wellenleiter oder mindestens ein Teil eines optischen Wellenleiters zugeordnet ist. Der erste Wafer ist z.B. aus Silizium oder einem anderen Halbleitermaterial (z.B. Indiumphosphid) ausgebildet und/oder weist z.B. einen Durchmesser von mindestens 5 cm auf. Darüber hinaus kann die Schicht aus Lithiumniobat anfänglich auf einem zweiten Wafer angeordnet sein (z.B. aus Silizium, wie oben bereits erwähnt), wobei der zweite Wafer nach dem Durchführen des Bondverfahrens entfernt wird. Das Bonden der Schicht aus Lithiumniobat mit dem Wellenleiter bzw. dem Teil des Wellenleiters erfolgt insbesondere vor einem Auftrennen des ersten Wafers in Sektionen mit den einzelnen Bauelementen.

Das Strukturieren der Schicht aus Lithiumniobat kann darüber hinaus z.B. ein teilweises Entfernen der Schicht aus Lithiumniobat umfassen, z.B. per Trockenätzung. Beispielsweise erfolgt das teilweise Entfernen der Schicht aus Lithiumniobat derart, dass sie einen Wellenleiterbereich, der sich entlang des Wellenleiterkerns oder des Abschnitts des Wellenleiterkerns erstreckt (parallel zum Substrat betrachtet), sowie zwei seitlich an den Wellenleiterbereich angrenzende Vertiefungen ausbildet. Die Vertiefungen befinden sich - in einer Richtung senkrecht Wellenleiterbereich und parallel zum Substrat betrachtet - auf einander gegenüberliegenden Seiten des Wellenleiterbereichs. Der Wellenleiterbereich weist eine größere Dicke auf als seitlich an ihn angrenzende, etwaig in den Vertiefungen noch vorhandene Restabschnitte der ursprünglichen Lithiumniobatschicht. Möglich ist insbesondere, dass die Schicht aus Lithiumniobat in ihrem Wellenleiterbereich nicht entfernt wird und/oder in den Bereichen der Vertiefungen vollständig entfernt wird. Denkbar ist zudem, dass die Breite des Wellenleiterbereichs von der Breite des Wellenleiterkerns (gemessen parallel zum Substrat) abweicht; z.B. ist der Wellenleiterbereich der strukturierten Lithiumniobatschicht breiter als der Wellenleiterkern. Beispielsweise beträgt die Breite des Wellenleiterbereichs der strukturierten Lithiumniobatschicht höchstens das 1,2-Fache oder höchstens das 1,5-Fache der Breite des Wellenleiterkerns. Der Wellenleiterbereich der strukturierten Lithiumniobatschicht kann natürlich auch zumindest näherungsweise dieselbe Breite wie der Wellenleiterkern aufweisen.

In einem weiteren Ausführungsbeispiel der Erfindung weist der Wellenleiterkern zwei Abschnitte auf, wobei ein erster Abschnitt des Wellenleiterkerns vor dem Anordnen der Schicht aus Lithiumniobat und ein zweiter Abschnitt des Wellenleiterkerns nach dem Anordnen der Schicht aus Lithiumniobat erzeugt wird. Insbesondere befinden sich nach der Herstellung der beiden Abschnitte des Wellenleiterkerns der erste und der zweite Abschnitt auf einander abgewandten Seiten der Schicht aus Lithiumniobat. Der auf diese Weise erzeugte Wellenleiter weist z.B. aufgrund des geringeren Überlapp der in ihm geführten optischen Moden mit dem Mantelmaterial geringere optische Verluste auf.

Das Anordnen der mindestens einen Kontaktstruktur (z.B. in Form einer Elektrode) zur elektrischen Kontaktierung der Schicht aus Lithiumniobat umfasst z.B. ein Erzeugen mindestens einer Metallschicht (z.B. einer Goldschicht) auf einer dem Substrat abgewandten Seite der Schicht aus Lithiumniobat.

Beispielsweise umfasst das Erzeugen des optischen Wellenleiters oder des Teils des optischen Wellenleiters ein Herstellen einer ersten Mantelschicht (z.B. einer Schicht, die Siliziumdioxid aufweist oder aus Siliziumdioxid besteht) auf dem Substrat (z.B. per Gasphasenabscheidung), wobei der Wellenleiterkern oder der Abschnitt des Wellenleiterkerns auf der Mantelschicht erzeugt wird. Das Erzeugen des Wellenleiterkerns bzw. des Abschnitts des Wellenleiterkerns beinhaltet beispielsweise ein Erzeugen einer Wellenleiterkernmaterialschicht (z.B. eine Schicht, die aus Siliziumnitrid besteht oder Siliziumnitrid aufweist) auf der ersten Mantelschicht sowie ein Strukturieren der Wellenleiterkernmaterialschicht (per Nass- oder Trockenätzung). Anschließend kann eine weitere (zweite) Mantelschicht erzeugt werden (z.B. wiederum per Gasphasenabscheidung). Die zweite Mantelschicht weist insbesondere dasselbe Material wie die erste Mantelschicht auf.

Es folgt ein Planarisieren und/oder Polieren der erzeugten Schichten, insbesondere der zweiten Mantelschicht und ggf. der darunter liegenden Wellenleiterkernmaterialschicht. Das Planarisieren und/oder Polieren erfolgt z.B. per CMP - chemisch-mechanisches Polieren. Denkbar ist, dass die die zweite Mantelschicht hierbei, z.B. in einem Bereich oberhalb des Wellenleiterkerns, vollständig entfernt wird und somit nach dem Planarisieren/Polieren nur noch seitlich an den Wellenleiterkern angrenzt. Möglichst ist allerdings auch, dass die zweite Mantelschicht oberhalb des Wellenleiterkerns nicht vollständig entfernt wird. Die Schicht aus Lithiumniobat wird in diesem Fall nicht unmittelbar auf den Wellenleiterkern, sondern auf dem verbliebenen Material der zweiten Mantelschicht angeordnet. Durch das chemisch-mechanische Polieren wird beispielsweise eine sehr plane Oberfläche (z.B. mit einer Rauigkeit im nm-Bereich) erzeugt, mit der die Schicht aus Lithiumniobat verbunden werden kann (insbesondere per Bondverfahren, wie oben beschrieben).

Nach dem Verbinden der Lithiumniobatschicht mit dem optischen Wellenleiter kann ein Abdünnen der Lithiumniobatschicht auf eine gewünschte Zieldicke und/oder ein Polieren der Lithiumniobatschicht erfolgen; z.B. ebenfalls per CMP. Die Zieldicke der Lithiumniobatschicht (wie auch die Dicken der Mantelschichten und/oder der Wellenleiterkernmaterialschicht) sind im Prinzip frei wählbar und werden insbesondere abhängig von dem herzustellenden optischen Bauelement festgelegt. Ein Strukturieren der Schicht aus Lithiumniobat erfolgt insbesondere nach dem Abdünnen der Lithiumniobatschicht. In einem weiteren Schritt wird z.B. die mindestens eine Kontaktstruktur erzeugt und/oder es wird mindestens eine Passivierungsschicht (z.B. aus Siliziumoxid) hergestellt.

Die Erfindung betrifft auch ein optisches Bauelement, insbesondere hergestellt mit dem erfindungsgemäßen Verfahren, mit
- einem Substrat;
- einem auf dem Substrat angeordneten optischen Wellenleiter mit einem Wellenleiterkern oder einem Abschnitt des Wellenleiterkerns, wobei der Wellenleiterkern oder der Abschnitt des Wellenleiterkerns Siliziumnitrid, ein Polymer oder ein III-V-Halbleitermaterial aufweist;
- mindestens einer Schicht aus Lithiumniobat, die sich auf einer dem Substrat abgewandten Seite des Wellenleiterkerns oder eines Abschnitts des Wellenleiterkerns befindet, wobei
- die Schicht aus Lithiumniobat in Form einer Struktur ausgebildet ist, die sich entlang des Wellenleiterkerns oder des Abschnitts des Wellenleiterkerns erstreckt, und/oder
- auf der Schicht aus Lithiumniobat mindestens eine Kontaktstruktur zur elektrischen Kontaktierung der mindestens einen Schicht aus Lithiumniobat angeordnet ist.

Bei dem erfindungsgemäßen optischen Bauelement handelt es sich insbesondere um ein elektrooptisches Bauelement, z.B. in Form eines elektrooptischen Modulators (wie etwa einen Modulator mit geringen optischen Durchgangsverlusten und/oder einen Hochgeschwindigkeitsmodulator für optische Kommunikationssysteme), oder in Form eines (insbesondere verlustarmen) Schalters für Anwendungen der Quantenkommunikation oder der sonstigen Nachrichtentechnik.

Die oben in Bezug auf das erfindungsgemäße Verfahren beschriebenen Ausführungsbeispiele können natürlich analog zur Weiterbildung des erfindungsgemäßen optischen Bauelements herangezogen werden. Beispielsweise umfasst der Wellenleiterkern einen ersten und zweiten Abschnitt, wobei sich der erste und der zweite Abschnitt auf einander abgewandten Seiten der Schicht aus Lithiumniobat befinden. Denkbar ist auch, dass der Wellenleiterkern Siliziumnitrid aufweist oder aus Siliziumnitrid besteht.

Die Erfindung wird im Folgenden anhand von Ausführungsbeispielen unter Bezugnahme auf die Figuren näher erläutert. Es zeigen:
- Figur 1: schematisch einen Querschnitt eines optischen Bauelements gemäß einem ersten Ausführungsbeispiels der Erfindung;
- Figur 2: schematisch einen Querschnitt eines optischen Bauelements gemäß einem zweiten Ausführungsbeispiels der Erfindung; und
- Figur 3: schematisch einen Querschnitt eines optischen Bauelements gemäß einem dritten Ausführungsbeispiels der Erfindung.

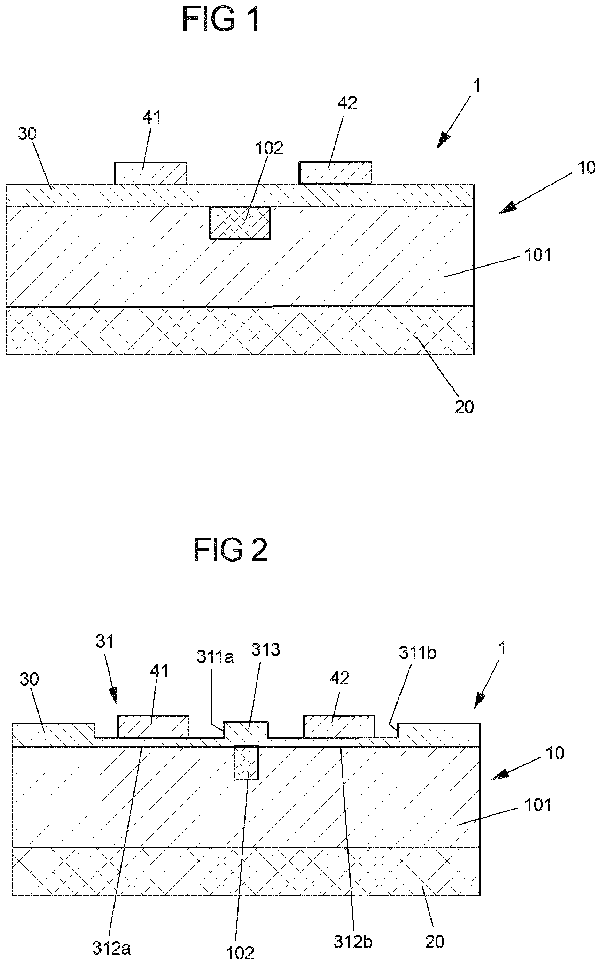

Figur 1 zeigt einen Querschnitt eines Teilabschnitts eines elektrooptischen Bauelements 1, zum Beispiel eines Modulators oder eines Schalters. Das elektrooptische Bauelement 1 umfasst mindestens einen auf einem Substrat 20 angeordneten optischen Wellenleiter 10. Der optische Wellenleiter 10 weist einen Wellenleitermantel 101 und einen in diesen eingebetteten Wellenleiterkern 102 auf. Oberhalb des Wellenleiterkerns 102, d. h. auf einer dem Substrat 20 abgewandten Seite des Wellenleiterkerns 102, befindet sich eine Schicht 30 aus Lithiumniobat. Die Lithiumniobatschicht 30 erstreckt sich vollständig über den Wellenleiterkern 102 hinweg und zumindest über einen Teil des Wellenleitermantels 101.

Darüber hinaus befinden sich auf der Schicht 30 aus Lithiumniobat zwei Kontaktstrukturen in Form einer ersten und einer zweiten Elektrode 41, 42, die - entlang der Haupterstreckungsebene des Substrats 20 betrachtet - auf unterschiedlichen Seiten des Wellenleiterkerns 102 angeordnet sind. Mit Hilfe der Elektroden 41, 42 lässt sich die Schicht 30 aus Lithiumniobat elektrisch kontaktieren, so dass durch Anlegen einer Spannung an die Elektroden 41, 42 der Brechungsindex der Lithiumniobatschicht 30 veränderbar ist. Der Brechungsindex der Lithiumniobatschicht 30 wiederum trägt zu einem effektiven Brechungsindex, den eine in dem Wellenleiter 10 geführte optische Mode erfährt, bei, so dass durch Anlegen einer Spannung an Elektroden 41, 42 die Ausbreitung der optischen Mode beeinflussbar ist.

Der Wellenleiterkern 102 besteht beispielsweise aus Siliziumnitrid, während der Wellenleitermantel 101 aus Siliziumdioxid ausgebildet ist. Bei dem Substrat 20 handelt es sich insbesondere um Siliziumsubstrat, z.B. einen Wafer aus Silizium. Die Erfindung ist jedoch nicht auf dieses Materialsystem beschränkt; vielmehr könnten der Wellenleiterkern 102 und der Wellenleitermantel 101 jeweils auch aus einem Polymer oder aus einem III-V-Halbleitermaterial bestehen. Die Elektroden 41, 42 sind insbesondere in Form einer strukturierten Metallschicht ausgebildet. Die Metallschicht umfasst insbesondere eine strukturierte Goldschicht.

Zur Herstellung des in Figur 1 gezeigten elektrooptischen Bauelements 1 wird, wie oben bereits erläutert, zunächst eine erste Mantelschicht auf dem Substrat 20 angeordnet und auf der ersten Mantelschicht eine Schicht aus dem Material des Wellenleiterkerns 102, zum Beispiel das erwähnte Siliziumnitrid, erzeugt. Anschließend erfolgt die Strukturierung der Kernmaterialschicht, insbesondere durch Entfernen seitlicher Bereiche der Kernmaterialschicht, so dass der in Figur 1 gezeigte rechteckige Querschnitt des Wellenleiterkerns 102 entsteht. Nach der Strukturierung der Kernmaterialschicht wird eine zweite Mantelschicht, insbesondere aus demselben Material wie die erste Mantelschicht, erzeugt, die die Bereiche seitlich des Wellenleiterkerns 102 auffüllt und sich auch oberhalb des Kerns 102 erstreckt.

Wie ebenfalls oben bereits erläutert, wird diese zweite Mantelschicht planarisiert; zum Beispiel wird sie oberhalb des Wellenleiterkerns 102 komplett entfernt. Anschließend wird die zunächst auf einem zweiten Substrat (nicht dargestellt), insbesondere auf einem zweiten Wafer, angeordnete Schicht 30 aus Lithiumniobat mittels eines Bondverfahrens mit dem Wellenleiter 10, d.h. insbesondere mit einer Oberfläche des Wellenleiterkerns 102 und einer sich jeweils seitlich des Wellenleiterkerns 102 erstreckenden Oberfläche des Wellenleitermantels 101 verbunden. Das Verbinden der Lithiumniobatschicht 30 kann mit Hilfe einer (insbesondere adhesiven) Zwischenschicht (nicht dargestellt) erfolgen. Denkbar ist auch, dass ein unmittelbares Bonden der Lithiumniobatschicht 30 mit den Oberflächen des Wellenleitermantels 101 und des Wellenleiterkerns 102 erfolgt. Darüber hinaus ist es denkbar, dass die erwähnte zweite Mantelschicht nicht komplett entfernt wird, so dass das Verbinden (Bonden) der Lithiumniobatschicht 30 mit dem Wellenleiter 10 über die verbleibende zweite Mantelschicht (und ggf. über eine weitere Zwischenschicht) erfolgt. Nach dem Bonden der Lithiumniobatschicht 30 mit dem Wellenleiter 10 wird das zweite Substrat (und ggf. weitere, zwischen der Lithiumniobatschicht 30 und dem zweiten Substrat befindliche Materialschichten) entfernt.

Eine Abwandlung des elektrooptischen Bauelements 1 aus Figur 1 ist in Figur 2 dargestellt. Danach sind die Elektroden 41, 42 in einem strukturierten Bereich 31 der Schicht 30 aus Lithiumniobat angeordnet. Der strukturierte Bereich 31 umfasst Vertiefungen 311a, 311b seitlich des Wellenleiterkerns 102, in denen die Lithiumniobatschicht 30 teilweise (bis auf Bereiche 312a, 312b mit einer geringeren Restdicke) entfernt wurde und in dem die Elektroden 41, 42 angeordnet sind. Denkbar ist auch, dass die Lithiumniobatschicht 30 zur Erzeugung der Vertiefungen 311a, 311b vollständig entfernt wird. Oberhalb des Wellenleiterkerns 102 befindet sich ein durch die Vertiefungen 311a, 311b begrenzter Wellenleiterbereich 313 der Lithiumniobatschicht 30, der - parallel zum Substrat 20 betrachtet - dem Verlauf des Wellenleiterkerns 102 zumindest abschnittsweise folgt und der eine größere Dicke - senkrecht zum Substrat 20 betrachtet - als die Bereiche 312a, 312b besitzt. Zudem besitzt der Wellenleiterbereich 313 eine etwas größere Breite (Ausdehnung parallel zum Substrat 20) als der Wellenleiterkern 102. Denkbar ist jedoch auch, dass der Wellenleiterbereich 313 zumindest näherungsweise dieselbe Breite wie der Wellenleiterkern 102 oder eine geringere Breite als der Wellenleiterkern 102 besitzt.

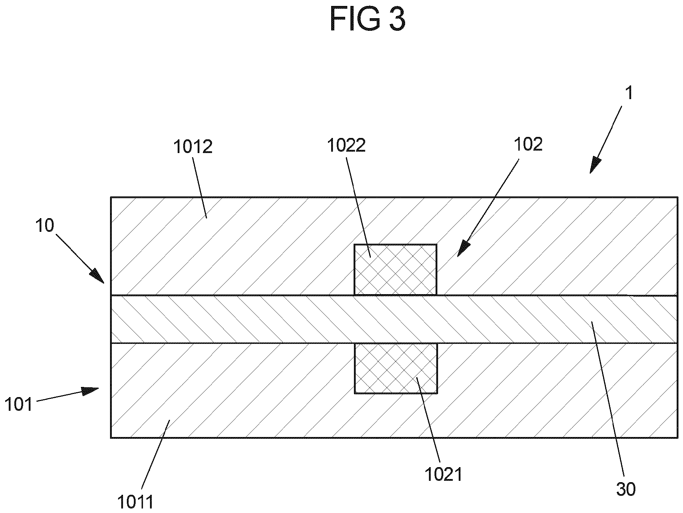

Das in Figur 3 dargestellte erfindungsgemäße elektrooptische Bauelement 1 weist einen optischen Wellenleiter 10 mit einem Wellenleiterkern 102 auf, wobei der Wellenleiterkern 102 einen ersten und einen zweiten Abschnitt 1021, 2022 besitzt, die sich auf einander abgewandten Seiten der Schicht 30 aus Lithiumniobat befinden. Die Abschnitte 1021, 2022 des Wellenleiterkerns 102 sind jeweils von einem ersten und zweiten Abschnitt 1011, 1012 eines Wellenleitermantels 101 umgeben. Die Abschnitte 1011, 1012 des Wellenleitermantels 101 erstrecken sich entsprechend analog zu den Abschnitten 1021, 1022 des Wellenleiterkerns 102 ebenfalls auf einander abgewandten Seiten der Schicht 30 aus Lithiumniobat. Der untere Abschnitt 1011 des Wellenleitermantels 101 ist auf einem (nicht dargestellten) Substrat angeordnet (analog zu den Figuren 1 und 2). Beispielsweise besteht der Wellenleiterkern 102, d.h. die Abschnitte 1021, 1022, aus Siliziumnitrid und der Wellenleitermantel 101 (dessen Abschnitte 1011, 1012) aus Siliziumdioxid. Als Substrat kann wiederum ein Siliziumsubstrat, z.B. ein Wafer aus Silizium, verwendet werden. Andere Materialsysteme sind jedoch ebenfalls möglich, wie oben bereits erläutert.

Die Herstellung des in Figur 3 gezeigten Bauelements erfolgt zunächst analog zu dem in Zusammenhang mit Figur 1 beschriebenen Verfahren. Nach dem Bonden der Schicht 30 aus Lithiumniobat mit einem unteren Teil des Wellenleiters 10, d. h. mit dem ersten (unteren) Abschnitt 1011 des Wellenleitermantels 101 und dem ersten (unteren) Abschnitt 1021 des Wellenleiterkerns 102, wird auf der Lithiumniobatschicht 30 eine Schicht aus dem Material des zweiten Abschnitts 1022 des Wellenleiterkerns 102 erzeugt und durch seitliches Entfernen dieses Materials sein rechteckiger Querschnitt hergestellt. Die Breite (parallel zum Substrat bzw. zur Lithiumniobatschicht 30) des zweiten Abschnittes 1022 des Wellenleiterkerns 102 entspricht insbesondere der Breite des ersten Abschnitts 1021 des Wellenleiterkerns 102. Anschließend wird das Material des oberen Abschnitts 1012 des Wellenleitermantels 101 abgeschieden. Weitere Prozessionsschritte können folgen, zum Beispiel eine Bearbeitung (z.B. eine Planarisierung) des oberen Abschnitts 1012 der Mantelschicht 101 und/oder ein Anbringen von Elektroden zur Kontaktierung der Schicht 30 aus Lithiumniobat.

## Patentansprüche

1. Verfahren zum Herstellen eines optischen Bauelements, mit den Schritten
- Erzeugen mindestens eines optischen Wellenleiters (10) oder eines Teils eines optischen Wellenleiters (10) auf einem Substrat (20), wobei
- das Erzeugen des optischen Wellenleiters (10) oder des Teils des optischen Wellenleiters (10) ein Erzeugen eines Wellenleiterkerns (102) oder eines Abschnitts (1021) eines Wellenleiterkerns (102) umfasst, wobei der Wellenleiterkern (102) oder der Abschnitt (1021) des Wellenleiterkerns (102) Siliziumnitrid, ein Polymer oder ein III-V-Halbleitermaterial aufweist;
- Anordnen mindestens einer Schicht (30) aus Lithiumniobat auf einer dem Substrat (20) abgewandten Seite des Wellenleiterkerns (102) oder des Abschnitts (1021) des Wellenleiterkerns (102), wobei
- nach dem Anordnen der mindestens einen Schicht (30) aus Lithiumniobat zumindest einer der folgenden Schritte durchgeführt wird: Strukturieren der mindestens einen Schicht (30) aus Lithiumniobat, Erzeugen eines weiteren Abschnitts (1022) des Wellenleiterkerns (102) und/oder Anordnen mindestens einer Kontaktstruktur (41, 42) zur elektrischen Kontaktierung der mindestens einen Schicht (30) aus Lithiumniobat.

2. Verfahren nach Anspruch 1, **dadurch gekennzeichnet, dass** die Schicht (30) aus Lithiumniobat mittels eines Bondverfahrens mit dem optischen Wellenleiter (10) oder dem Teil des optischen Wellenleiters verbunden wird.

3. Verfahren nach Anspruch 2, **dadurch gekennzeichnet, dass** das Bondverfahren ein Verbinden der Schicht (30) aus Lithiumniobat mit dem optischen Wellenleiter (10) oder dem Teil des optischen Wellenleiters (10) mit Hilfe mindestens einer Zwischenschicht umfasst.

4. Verfahren nach einem der vorherigen Ansprüche, **dadurch gekennzeichnet, dass** es sich bei dem Substrat (20) um einen ersten Wafer handelt, auf dem zur Herstellung einer Mehrzahl optischer Bauelemente (1) gleichzeitig mehrere optische Wellenleiter (10) oder mehrere Teile optischer Wellenleiter (10) erzeugt werden, wobei die Schicht (30) aus Lithiumniobat zunächst auf einem zweiten Wafer angeordnet ist, der nach dem Durchführen des Bondverfahrens entfernt wird.

5. Verfahren nach einem der vorherigen Ansprüche, **dadurch gekennzeichnet, dass** das Strukturieren der Schicht (30) aus Lithiumniobat ein teilweises Entfernen der Schicht (30) aus Lithiumniobat umfasst.

6. Verfahren nach Anspruch 5, **dadurch gekennzeichnet, dass** das teilweise Entfernen der Schicht (30) aus Lithiumniobat so erfolgt, dass sie einen Wellenleiterbereich (313), der sich entlang des Wellenleiterkerns (102) oder des Abschnitts (1021) des Wellenleiterkerns (102) erstreckt, ausbildet, wobei an den Wellenleiterbereich (313) jeweils seitliche Vertiefungen (311a, 311b) der Schicht (30) aus Lithiumniobat angrenzen.

7. Verfahren nach einem der vorherigen Ansprüche, **dadurch gekennzeichnet, dass** der Abschnitt (1021) des Wellenleiterkerns (102) einen ersten Abschnitt des Wellenleiterkerns (102) darstellt, der vor dem Anordnen der Schicht (30) aus Lithiumniobat erzeugt wird, wobei ein zweiter Abschnitt (1022) des Wellenleiterkerns (102) nach dem Anordnen der Schicht (30) aus Lithiumniobat hergestellt wird.

8. Verfahren nach Anspruch 7, **dadurch gekennzeichnet, dass** der erste und der zweite Abschnitt (1021, 1022) des Wellenleiterkerns (102) auf einander abgewandten Seiten der Schicht (30) aus Lithiumniobat erzeugt werden.

9. Verfahren nach einem der vorherigen Ansprüche, **dadurch gekennzeichnet, dass** das Anordnen der mindestens einen Kontaktstruktur (41, 42) zur elektrischen Kontaktierung der Schicht (30) aus Lithiumniobat ein Erzeugen mindestens einer Metallschicht auf einer dem Substrat (20) abgewandten Seite der Schicht (30) aus Lithiumniobat umfasst.

10. Verfahren nach einem der vorherigen Ansprüche, **dadurch gekennzeichnet, dass** das Erzeugen des optischen Wellenleiters (10) oder des Teils des optischen Wellenleiters (10) ein Herstellen einer Mantelschicht auf dem Substrat (20) umfasst, wobei der Wellenleiterkern (102) oder der Abschnitt (1021) des Wellenleiterkerns (102) auf der Mantelschicht erzeugt wird.

11. Verfahren nach Anspruch 10, **dadurch gekennzeichnet, dass** nach dem Erzeugen des Wellenleiterkerns (102) oder des Abschnitts (1021) des Wellenleiterkerns (102) auf der Mantelschicht eine weitere Mantelschicht erzeugt wird.

12. Verfahren nach einem der vorherigen Ansprüche, **dadurch gekennzeichnet, dass** der Wellenleiterkern (102) oder der Abschnitt (1021) des Wellenleiterkerns (102) Siliziumnitrid aufweist und der optische Wellenleiter (10) oder der Teil des optischen Wellenleiters (10) einen Siliziumdioxid aufweisenden Wellenleitermantel (101) umfasst.

13. Optisches Bauelement, insbesondere hergestellt mit einem Verfahren gemäß einem der vorhergehenden Ansprüche, mit
- einem Substrat (20);
- einem auf dem Substrat (20) angeordneten optischen Wellenleiter (10) mit einem Wellenleiterkern (102) oder einem Abschnitt (1021) des Wellenleiterkerns (102), wobei der Wellenleiterkern (102) oder der Abschnitt (1021) des Wellenleiterkerns (102) Siliziumnitrid, ein Polymer oder ein III-V-Halbleitermaterial aufweist;
- mindestens einer Schicht (30) aus Lithiumniobat, die sich auf einer dem Substrat (20) abgewandten Seite des Wellenleiterkerns (102) oder eines Abschnitts (1021) des Wellenleiterkerns (102) befindet, wobei
- die Schicht (309 aus Lithiumniobat in Form einer Struktur ausgebildet ist, die sich entlang des Wellenleiterkerns (102) oder des Abschnitts (1021) des Wellenleiterkerns (102) erstreckt, und/oder
- auf der Schicht (30) aus Lithiumniobat mindestens eine Kontaktstruktur (41, 42) zur elektrischen Kontaktierung der mindestens einen Schicht (30) aus Lithiumniobat angeordnet ist.

14. Optisches Bauelement nach Anspruch 13, **dadurch gekennzeichnet, dass** der Wellenleiterkern (102) einen ersten und zweiten Abschnitt (1021, 1022) aufweist, wobei sich der erste und der zweite Abschnitt (1021, 1022) auf einander abgewandten Seiten der Schicht (30) aus Lithiumniobat befinden.

15. Optisches Bauelement nach Anspruch 13 oder 14, **dadurch gekennzeichnet, dass** der Wellenleiterkern (102) Siliziumnitrid aufweist.
